# EUROPEAN PATENT APPLICATION

(11) **EP 4 671 962 A1**
(43) Date of publication of application: **31.12.2025**
(21) Application number: 24760139.6
(22) Date of filing: 07.02.2024
(51) Int. Cl.: G06F 3/16, G06F 3/01, G06F 3/0481, G09G 5/00, G09G 5/02, G09G 5/22, G09G 5/24, G09G 5/37, G10L 15/00, G10L 15/10, G10L 15/22

(54) **ELECTRONIC APPARATUS, METHOD FOR CONTROLLING ELECTRONIC APPARATUS, AND PROGRAM**

(30) Priority: 24.02.2023 JP 2023027828
(71) Applicant: KYOCERA Document Solutions Inc., Osaka-shi, Osaka 540-8585 (JP)
(72) Inventor: IIZUKA Niito, Kyoto-shi, Kyoto 612-8501 (JP)
(74) Representative: Viering, Jentschura & Partner mbB Patent- und Rechtsanwälte
(86) International application number: PCT/JP2024/004173
(87) International publication number: WO 2024/176837

(57) **Abstract**

A program causes an electronic device that controls a display system that displays a first character that is based on speech of a first user and a second character that is based on speech of a second user on a display to perform the following steps: Acquiring at least one of the first character or the second character. Determining, based on a predetermined condition, whether at least one of the first character or the second character is based on the speech of the first user or the second user. Displaying the first character and the second character on the display while changing the display mode of at least one of the first character or the second character so that the display modes of the first character and the second character are different from each other.

## Description

### CROSS-REFERENCE TO RELATED APPLICATIONS

This application claims priority of Japanese Patent Application No. 2023-27828 filed in Japan on February 24, 2023, the entire disclosure of which is hereby incorporated by reference.

### TECHNICAL FIELD

The present disclosure relates to an electronic device, a method for controlling an electronic device, and a program.

### BACKGROUND OF INVENTION

A display system has been proposed that automatically converts a speaker's voice into text and displays captions in real time on a transparent display provided between the speaker and a hearing-impaired listener (see, for example, Non-Patent Literature 1). In this display system, the normal characters of the listener's side are displayed in an upper part of the transparent display, and the normal characters of the speaker's side are displayed in a lower part of the transparent display. The characters in the lower part of the transparent display are displayed so that the speaker can check for misconversions in automatic speech recognition. In addition, a translation display device that can smoothly assist conversations between speakers who use different languages has been proposed (see, for example, Patent Literature 1). This device uses a single display means to display character strings in language A and character strings in language B in two separate facing display areas A1 and B1, so that the characters are displayed in an orientation that is easy for each user to read.

### CITATION LIST

### NON PATENT LITERATURE

Non-Patent Literature 1: Kenta Yamamoto, Ippei Suzuki, Akihisa Shitara, and Yoichi Ochiai, 2021. "See-Through Captions: Real-Time Captioning on Transparent Display for Deaf and Hard-of-Hearing People", [online], 27 Jan 2021, In arXiv e-prints. 5 pages, Internet <URL: https://arxiv.org/abs/2101.11326>

### PATENT LITERATURE

Patent Literature 1: Japanese Unexamined Patent Application Publication No. 2019-70915

### SUMMARY

In an embodiment, (1) a program causes an electronic device that controls a display system that displays a first character that is based on speech of a first user and a second character that is based on speech of a second user on a display to perform the following steps.

Acquiring at least one of the first character or the second character.

Determining whether at least one of the first character or the second character is based on the speech of the first user or the second user based on a predetermined condition.

Displaying the first character and the second character on the display while changing a display mode of at least one of the first character or the second character so that the display modes of the first character and the second character are different from each other.

(2) The program of (1) above, in which
in the determining,
whether at least one of the first character or the second character is based on the speech of the first user or the second user is determined based on a condition related to detection using at least one selected from a group consisting of a switch, an acceleration sensor, a gyro sensor, a magnetic sensor, a camera, and a plurality of microphones as the predetermined condition.

(3) The program of (1) above, in which
in the displaying,
one of the first character and the second character is displayed on the display so as to be emphasized over another of the first character and the second character.

(4) The program of (1) above, in which
in the displaying,
one of the first character and the second character is displayed on the display with at least one selected from a group consisting of a size, thickness, color, font, background color, decorative character, and display position different from that of another of the first character and the second character.

(5) The program of (1) above, in which
when a language of the first character and a language of the second character are different from each other,
the program causes the electronic device to perform translating the first character into the language of the second character, and
a result of translating the first character into the language of the second character is displayed as the first character in the displaying.

(6) The program of (1) above, in which
when a language of the first character and a language of the second character are different from each other,
a result of translating the first character into the language of the second character is acquired as the first character in the acquiring, and
the result of translating the first character into the language of the second character is displayed as the first character in the displaying.

(7) The program of any one of (1) to (6) above, in which
in the displaying,
one of the first character and the second character is displayed in a horizontally reversed manner in a second display area of the display.

(8) The program of any one of (1) to (6) above causes
an electronic device that controls a display system in which the display includes a first display area provided with a light-shielding portion that at least partially blocks the transmission of light, and a second display area that at least partially transmits light to execute the following steps.
That is, in the displaying,
either the first character or the second character is displayed in a horizontally reversed manner in the first display area so that at least one of the first character or the second character is shielded by the light-shielding portion, and
at least one of the first character or the second character is displayed in the second display area.

(9) The program of (1) above, in which
in the displaying,
if the first character includes a predetermined keyword, a predetermined image or video corresponding to the predetermined keyword is displayed on the display, and
if the second character includes the predetermined keyword, the predetermined image or video is not displayed on the display.

(10) The program of (1) above, in which
in the acquiring, the first character and the second character are acquired separately, or
the program causes the electronic device to perform storing the first character and the second character separately from each other.

In an embodiment, (11) an electronic device includes a controller that performs control to display a first character that is based on speech of a first user and a second character that is based on speech of a second user on a display.

The controller acquires at least one of the first character or the second character,
determines whether at least one of the first character or the second character is based on the speech of the first user or the second user based on a predetermined condition, and
displays the first character and the second character on the display while changing a display mode of at least one of the first character or the second character so that the display modes of the first character and the second character are different from each other.

In an embodiment, (12) a control method controls an electronic device that displays a first character that is based on speech of a first user and a second character that is based on speech of a second user on a display. The control method includes the following steps.

Acquiring at least one of the first character or the second character.

Determining whether at least one of the first character or the second character is based on the speech of the first user or the second user based on a predetermined condition.

Displaying the first character and the second character on the display while changing a display mode of at least one of the first character or the second character so that the display modes of the first character and the second character are different from each other.

### BRIEF DESCRIPTION OF THE DRAWINGS

FIG. 1 is a perspective view illustrating a usage scene of a projector display system according to an embodiment.
FIG. 2 is a schematic configuration diagram of the projector display system in FIG. 1.
FIG. 3 is a diagram illustrating an example of display on a transparent screen as seen from a first user side.
FIG. 4 is a diagram illustrating an example of display on a transparent screen as seen from a second user side.
FIG. 5 is a diagram illustrating the relationship between the arrangement of a light-shielding portion and a second user in an embodiment.
FIG. 6 is a diagram illustrating an example of the arrangement of a screen unit and a light-shielding portion.
FIG. 7 is a diagram illustrating an example of the arrangement of a screen unit and a light-shielding portion.
FIG. 8 is a diagram illustrating an example of the arrangement of a screen unit and a light-shielding portion.
FIG. 9 is a diagram illustrating an example of the arrangement of a screen unit and a light-shielding portion.
FIG. 10 is a schematic configuration diagram of a projector display system according to an embodiment that uses an external cloud server for speech recognition.
FIG. 11 is a top view illustrating an example of the arrangement of each component of a projector display system.
FIG. 12 is a schematic configuration diagram of a projector display system including a detection unit according to an embodiment.
FIG. 13 is a diagram illustrating an example of a sensor included in the detection unit in FIG. 12.
FIG. 14 is a diagram for explaining a problem solved by a projector display system according to an embodiment.
FIG. 15 is a flowchart for explaining the operation of a projector display system according to an embodiment.
FIG. 16A is a diagram illustrating an example of the operation of a projector display system according to an embodiment.
FIG. 16B is a diagram illustrating an example of the operation of a projector display system according to an embodiment.
FIG. 17A is a diagram illustrating an example of the operation of a projector display system according to an embodiment.
FIG. 17B is a diagram illustrating an example of the operation of a projector display system according to an embodiment.
FIG. 18A is a diagram illustrating an example of the operation of a projector display system according to an embodiment.
FIG. 18B is a diagram illustrating an example of the operation of a projector display system according to an embodiment.
FIG. 19 is a flowchart for explaining the operation of a projector display system according to an embodiment.

### DESCRIPTION OF EMBODIMENTS

When the above-described device is used to display characters spoken by two interlocutors on the same screen, displaying each character in an appropriate manner is desirable in order to facilitate communication between the interlocutors. The present disclosure provides an electronic device, a method for controlling an electronic device, and a program that facilitate communication between interlocutors. According to an embodiment, an electronic device, a method for controlling an electronic device, and a program can facilitate communication between interlocutors.

Embodiments of the present disclosure are described below while referring to the drawings. The drawings used in the following description are schematic drawings. The dimensions and proportions in the drawings do not necessarily correspond to the actual dimensions and proportions.

### (Configuration of Projector Display System)

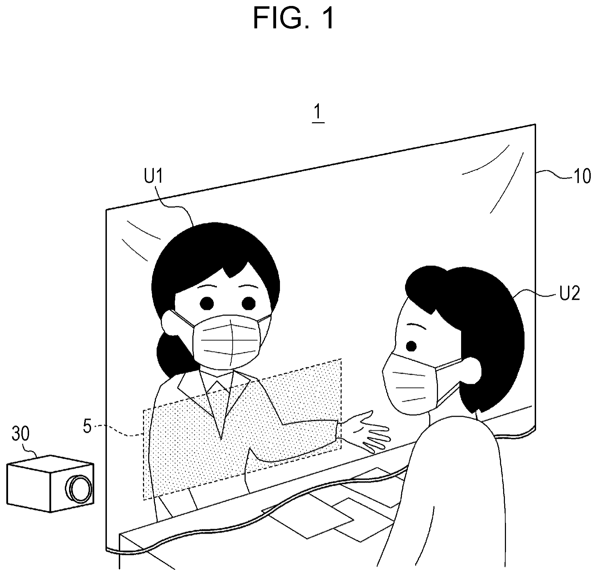

As illustrated in FIG. 1, a projector display system 1 according to an embodiment is a system that supports a conversation between a first user U1 and a second user U2. The second user U2 has a hearing impairment, for example. In addition, the second user U2 is not necessarily limited to a user who has a hearing impairment, and may be, for example, a user who does not have any particular disability. The second user U2 may be, for example, a person who wishes to communicate in a language different from that of the first user U1. Furthermore, the second user U2 may be, for example, a person who wishes to communicate in a language the same as that of the first user U1. As an example, the first user U1 is an employee in charge of a counter at a government, municipal, or public sector office. The second user U2 is, for example, a visitor to a government, municipal, or public sector office. Situations in which the projector display system 1 is used are not limited to those mentioned above. The projector display system 1 may also be used at the counters of financial institutions, medical institutions, and public transportation facilities, at the sales outlets of private businesses, and in conference rooms in offices etc.

In recent years, due to the spread of infectious diseases, vinyl curtains or acrylic panels etc. may be installed between counter staff and customers in situations where counter staff come into contact with customers as a measure against flying droplets. In the projector display system 1, a vinyl curtain or an acrylic panel is used as a base material 10, and a transparent screen 5 is arranged on the base material 10. A projector 30 projects speech content of the first user U1 as characters onto the transparent screen 5. This allows the second user U2, who is positioned opposite the first user U1 across the transparent screen 5, to visually check the speech content of the first user U1 even if, for example, the first user U1 cannot hear or has difficulty hearing the speech content of the first user U1. The projector 30 may project the speech content of the second user U2 as characters onto the transparent screen 5. This allows the first user U1, who is positioned opposite the second user U2 across the transparent screen 5, to visually confirm the speech content of the second user U2, even if the first user U1 cannot hear or has difficulty hearing the speech content of the second user U2.

The transparent screen 5 can be disposed at any location on the base material 10. The transparent screen 5 may be disposed at a position that does not obstruct the first user U1 and the second user U2 from seeing each other's faces. For example, the transparent screen 5 may be disposed at a position to which the first user U1 and the second user U2 lower their lines of sight from the horizontal direction.

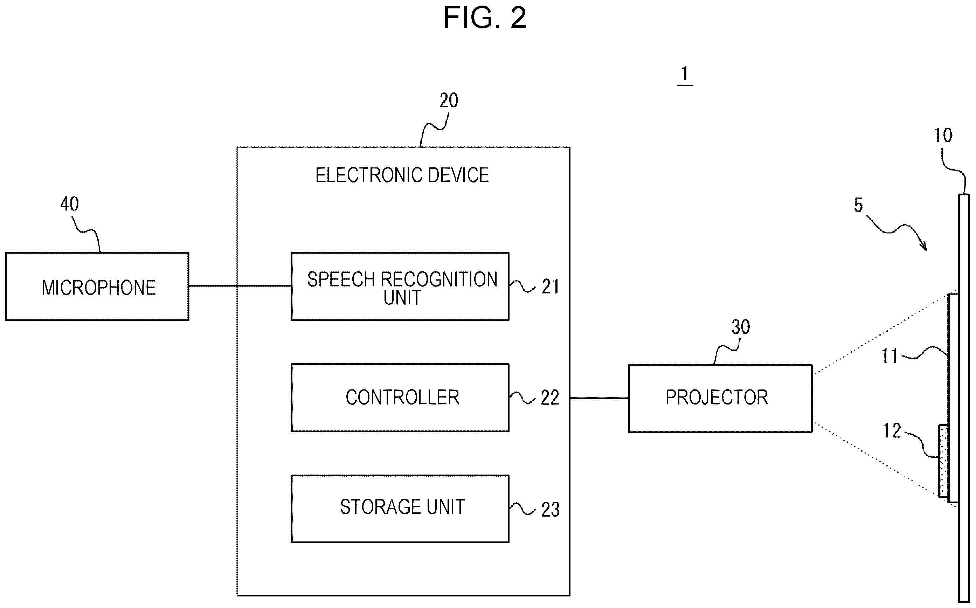

The projector display system 1 includes, for example, an electronic device 20 and a microphone 40 in addition to the transparent screen 5 and the projector 30, as illustrated in FIG. 2. Thus, the display system according to an embodiment may include a display (e.g., the transparent screen 5).

The transparent screen 5 includes a screen unit 11 and a light-shielding portion 12 disposed on the base material 10.

The screen unit 11 is a film-like, sheet-like, or plate-like member for projector projection that can be attached to the base material 10. In general, the screen unit 11 itself may be referred to as a "transparent screen." The screen unit 11 diffuses part of the light incident from the projector 30 toward the incoming side and the outgoing side. The first user U1 and the second user U2 can recognize an image projected from the projector 30 due to the light diffused by the screen unit 11 entering their fields of vision. The shape of the screen unit 11 may be, for example, rectangular, but is not limited to this shape. The screen unit 11 may have various shapes.

The light-shielding portion 12 at least partially blocks (shields) transmission of the light emitted from the projector 30. The light-shielding portion 12 is, for example, a dichroic film that suppresses light of a specific wavelength. For example, a dichroic film that does not transmit the color red can be used for the light-shielding portion 12. The light-shielding portion 12 can be disposed to overlap part of the screen unit 11. For example, the light-shielding portion 12 is disposed to overlap a surface of the screen unit 11. The shape of the light-shielding portion 12 can be, for example, rectangular, but is not limited this shape. The light-shielding portion 12 can be various shapes. The part of the screen unit 11 where the light-shielding portion 12 is not arranged may be a part that at least partially transmits light.

The microphone 40 is arranged on the side where the first user U1 is located. For example, the microphone 40 may be arranged on a desk in front of the first user U1. The microphone 40 may be attached to a headset worn by the first user U1. The microphone 40 converts the sounds uttered by the first user U1 into an electrical signal and outputs the electrical signal to the electronic device 20. Furthermore, the microphone 40 may be arranged not only on the first user U1 side but also on the second user U2 side. Furthermore, the microphone 40 may be a microphone array (array microphone) in which multiple microphones are arranged at predetermined positions. With the microphone array, the orientation (direction) of the first user U1 and/or the second user U2 with respect to the microphone array can be identified based on the sounds uttered by the first user U1 and/or the second user U2.

The electronic device 20 receives an output from the microphone 40, recognizes the speech content of at least one of the first user U1 or the second user U2, and generates a display object based on the recognized speech content. The electronic device 20 converts the display object into an image signal and causes the projector 30 to display the display object. The display object is, for example, text (a character string). Furthermore, the display object may indicate content (character string) obtained by translating content (character string) in a first language recognized as speech content of the first user U1 into a second language that is different from the first language. Here, the second language may be, for example, a language used by the second user. Hereinafter, in the embodiments of the present disclosure, the meaning of "character" may include "character string". In addition, in the embodiments of the present disclosure, the meaning of "character string" may include "character". The electronic device 20 may be a general-purpose device such as a mobile phone, a smartphone, a tablet terminal, or a personal computer, or may be a dedicated device. The electronic device 20 includes a speech recognition unit 21, a controller 22, and a storage unit 23.

The speech recognition unit 21 performs speech recognition processing based on an audio signal output from the microphone 40. The speech recognition result is output as text data. Various known technologies may be adopted for the speech recognition processing. The speech recognition unit 21 includes a speech recognition engine that performs speech recognition processing using a speech recognition dictionary stored in the storage unit 23. The speech recognition dictionary includes an acoustic model, a language model, and a speech dictionary. The speech recognition unit 21 may include a dedicated or general-purpose processor. The processing of the speech recognition unit 21 may be executed by the same processor as the processor that executes the functions of the controller 22 described below.

The controller 22 controls the entire electronic device 20 and causes the projector 30 to display the text of the speech content of the first user U1 and/or the second user U2 recognized by the speech recognition unit 21 as a display object. The controller 22 can control the display position and display mode of the display object on the transparent screen 5. As described later, the controller 22 can cause the projector 30 to project the text of the speech content of the first user U1 and/or the second user U2 as a first display object DO1 and a second display object DO2. The second display object DO2 is obtained by horizontally reversing the first display object DO1.

The controller 22 includes one or more processors. Such processors include a general-purpose processor that loads a specific program and executes a specific function, and a dedicated processor specialized for specific processing. Dedicated processors include ASICs (application-specific integrated circuits). The processors include PLDs (programmable logic devices). PLDs include FPGA (field-programmable gate arrays). The controller 22 may be either an SoC (system-on-a-chip) or an SiP (system in a package) in which one or more processors work together.

The storage unit 23 is configured to store a program executed by the controller 22, information necessary for processing executed by the controller 22, and information obtained as a result of processing executed by the controller 22. The storage unit 23 may store the above-mentioned speech recognition dictionary. The storage unit 23 may store, for example, a dictionary necessary for kanji conversion of recognized text information. The storage unit 23 may include at least one selected from a group consisting of a semiconductor storage device, a magnetic storage device, and an optical storage device. Semiconductor storage devices may include volatile memories such as a DRAM (dynamic random access memory) and an SRAM (static random access memory), and non-volatile memories such as a ROM (read only memory) and a flash memory. Semiconductor storage devices include an SSD (solid state drive) using a flash memory. Magnetic storage devices include magnetic tapes, floppy disks, and hard disks. Optical storage devices include, for example, CDs (compact discs), DVDs (digital versatile discs), and Blu-rays (registered trademark).

The projector 30 is disposed on the first user U1 side and projects display objects such as text, still images, and moving images onto the transparent screen 5. The projector 30 may also be disposed on the second user U2 side and project display objects such as text, still images, and moving images onto the transparent screen 5.

### (Example of Display of Projector Display System)

Next, an image displayed on the transparent screen 5 by the projector 30 based on an image signal from the electronic device 20 will be described. In the transparent screen 5, the area on the screen unit 11 is divided into a first display area A1 and a second display area A2. The first display area A1 is an area where the screen unit 11 and the light-shielding portion 12 overlap. The second display area A2 is an area where the screen unit 11 and the light-shielding portion 12 do not overlap. The first display area A1 and the second display area A2 are used to display the speech content of the first user U1 and/or the second user U2 as text to the first display area A1 and/or the second user U2. A display object displayed by the projector 30 in the second display area A2 is called a second display object DO2. The second display object DO2 is a display object obtained by horizontally reversing the first display object DO1. A display object displayed by the projector 30 in the first display area A1 is called the first display object DO1. The first display area A1 is an area that displays the content of the second display object DO2 displayed to the second user U2 to the first user U1 so that the content can be checked by the first user U1.

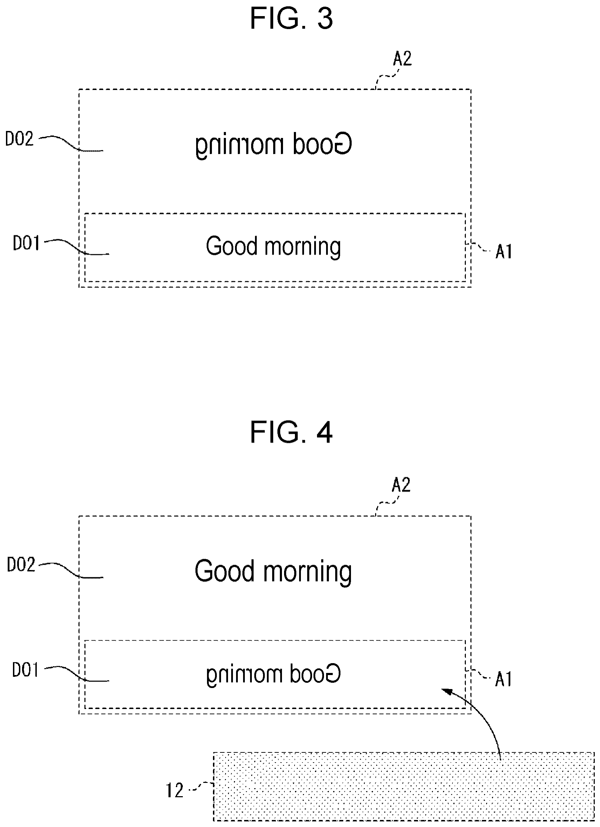

As illustrated in FIG. 3, when the transparent screen 5 is viewed from the first user U1, the first display object DO1 is displayed in the first display area A1. In addition, the second display object DO2 is displayed in the second display area A2. The second display object DO2 is displayed to the first user U1 as mirrored characters. The first display object DO1 is displayed as normal characters. "Mirrored characters" are characters obtained by horizontally reversing normal characters. "Normal characters" are characters that are displayed in a normal manner. A normal character may mean a character having a normal orientation. In the present disclosure, "normal orientation" means a state in which characters, etc. are displayed correctly from left to right from the user's perspective. "Normal orientation" is used in contrast to a state in which characters etc. are horizontally reversed.

On the other hand, when the image projected by the same projector 30 onto the transparent screen 5 is viewed from the second user U2 side, the second display object DO2 is displayed as normal characters as illustrated in FIG. 4. The first display object DO1 would be displayed as mirrored characters if the light-shielding portion 12 were not present. The first display object DO1 consists of unnecessary characters that do not need to be displayed to the second user U2, and since the characters are mirrored characters, the characters may be confusing to the second user U2. However, since the light-shielding portion 12 is disposed on the first display area A1 of the screen unit 11, the first display object DO1 is not displayed to the second user U2.

For example, in the case where the light-shielding portion 12 is a dichroic film that blocks the transmission of light of red wavelengths, the projector 30 projects the first display object DO1 using red light. As a result, the image light of the first display object DO1 is reflected by the light-shielding portion 12 and is viewed by the first user U1. On the other hand, since the image light of the first display object DO1 does not easily pass through the light-shielding portion 12, the image light is difficult for the second user U2 to see. As a result, the first display object DO1, which is in the form of mirrored characters, is difficult for the second user U2 to see. Therefore, the second user U2 is unlikely to be bothered by the first display object DO1. In addition, the images illustrated in FIG. 3 and FIG. 4 are examples of display of the projector display system, and the positions of the first display area A1 and the second display area A2 may be changed as appropriate.

### (Example of Using Viewing Angle Control Film in Light-Shielding Portion)

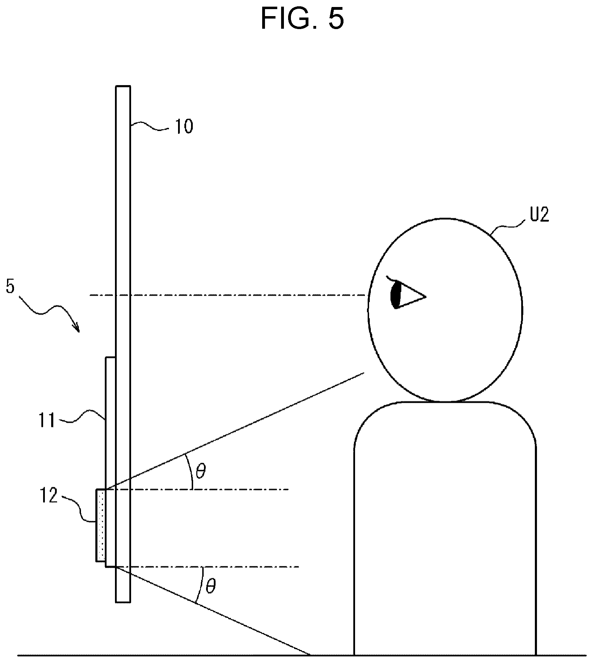

In an embodiment, the light-shielding portion 12 can be a film or member that limits the angle of propagation of transmitted light, rather than a dichroic film. Films that control the propagation direction of transmitted light include viewing angle control films. For example, as illustrated in FIG. 5, the light-shielding portion 12 can be configured to limit the range of propagation of transmitted light to a range from 0° to a predetermined angle θ in the vertical direction with respect to a normal line to the transparent screen 5, and not to allow light to propagate in other directions. The predetermined angle θ can be, for example, 10° to 30°, but is not limited to this range. As a result, the light-shielding portion 12 limits the vertical direction viewing angle to a range of 20. The light-shielding portion 12 can be said to have a blind effect. As illustrated in FIG. 5, when the eyes of the second user U2 are located outside this range, the second user U2 will have difficulty seeing the second display object DO2 projected on the light-shielding portion 12. Therefore, the second user U2 is unlikely to be bothered by the first display object DO1.

### (Arrangement of Transparent Screen and Light-Shielding Portion)

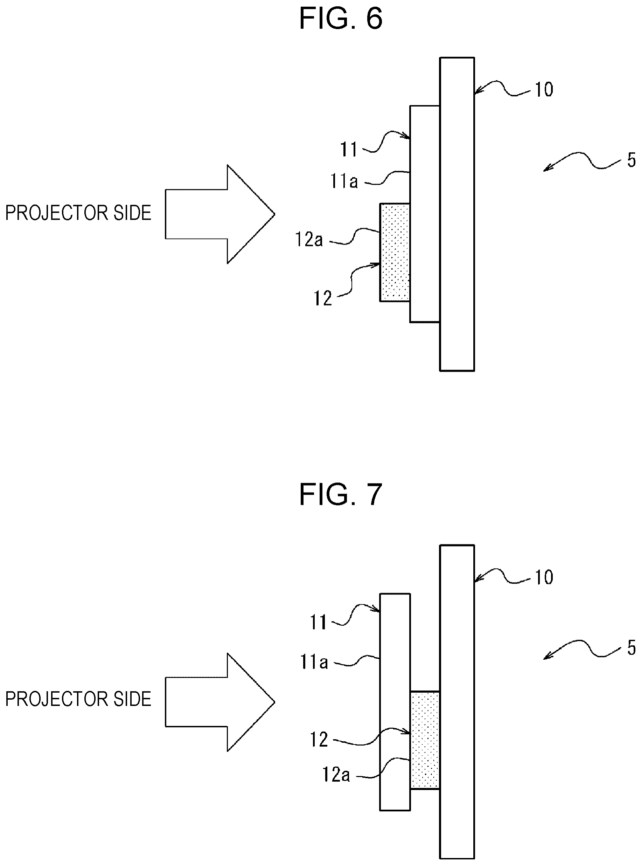

FIGs. 6 to 8 are diagrams illustrating examples of the arrangement of the base material 10, the screen unit 11, and the light-shielding portion 12 in the transparent screen 5. The light-shielding portion 12 may be a film or member having a light shielding function of another type, instead of a dichroic film and a viewing angle control film. The screen unit 11 and the light-shielding portion 12 have projector projection surfaces 11a and 12a, and as long as these surfaces face toward the projector 30 side (i.e., the first user U1 side), the base material 10, the screen unit 11, and the light-shielding portion 12 can be arranged in any order. The projector projection surfaces 11a and 12a are surfaces that are predetermined as the sides onto which light from the projector 30 is to be projected.

In FIG. 6, the transparent screen 5 is configured by arranging the screen unit 11 on the projector 30 side of the base material 10, and arranging the light-shielding portion 12 on the projector 30 side of the screen unit 11.

In FIG. 7, the transparent screen 5 is configured by arranging the light-shielding portion 12 on the projector 30 side of the base material 10, and further arranging the screen unit 11 on the projector 30 side of the base material 10 and the light-shielding portion 12.

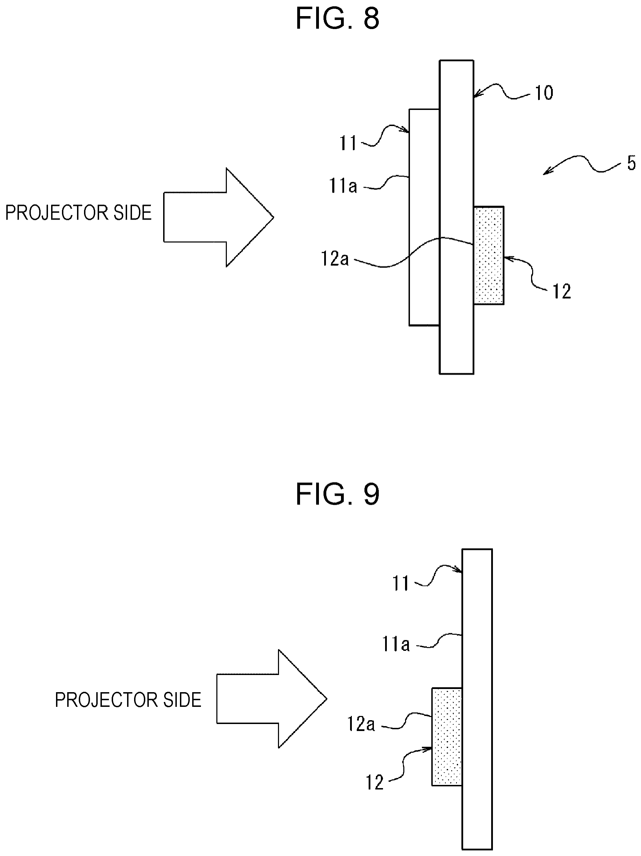

In FIG. 8, the transparent screen 5 includes the screen unit 11 arranged on the projector 30 side of the base material 10, and the light-shielding portion 12 arranged on the second user U2 side of the base material 10.

In FIGs. 6 to 8, an arrangement in which the order of the base material 10, the screen unit 11, and the light-shielding portion 12 is reversed in the horizontal direction is also possible. A transparent adhesive can be used to attach the base material 10, the screen unit 11, and the light-shielding portion 12 to each other. Alternatively, the base material 10, the screen unit 11, and the light-shielding portion 12 can be attached to each other by charging any one of the surfaces to be attached with static electricity. When static electricity is used for attachment, there is an advantage that the screen unit 11 and the light-shielding portion 12 can be easily removed and/or moved.

In addition, the transparent screen 5 can be configured such that the light-shielding portion 12 is attached to the screen unit 11 without the use of the base material 10 such as an acrylic plate or a vinyl sheet, as illustrated in FIG. 9. In this case, the screen unit 11 doubles as the base material 10.

### (Other Examples of Configurations of Transparent Screen and Light-Shielding Portion)

Various configurations other than the above-described example configurations can be adopted for the transparent screen 5 and/or the light-shielding portion 12 according to an embodiment. For example, the light-shielding portion 12 may be configured so that the position thereof relative to the screen unit 11 can be changed or so that the light-shielding portion 12 can be attached and detached. The light-shielding portion 12 may not be attached to the base material 10 and the screen unit 11, and may instead be placed opposite any position on the screen unit 11 and supported by something else. The light-shielding portion 12 may be attached to a member such as a roll screen. Here, the roll screen may be a transparent sheet wound in a roll that is hung from a ceiling or the like so that the screen can be pulled down and rolled up.

### (Display Modes of first Display Object DO1 and/or second Display Object)

The projector display system 1 can display the first display object DO1 and/or the second display object DO2 based on text information obtained by speech recognition of the contents spoken by the first user U1 and/or the second user U2 in various modes. The display mode of the first display object DO1 and/or the second display object DO2 is controlled by the electronic device 20. For example, a specific word may be registered as a predetermined word in the storage unit 23 of the electronic device 20. When the speech content of the first user U1 obtained as a result of the speech recognition includes a predetermined word registered in the storage unit 23, the controller 22 of the electronic device 20 can change the word in the second display object DO2 displayed by the projector 30 so that the word is displayed in an emphasized manner. Examples of displayed in an emphasized manner include changing the color of the characters to, for example, red, changing the font of the characters, and changing the thickness of the characters. On the other hand, the controller 22 of the electronic device 20 does not need to change a word in the second display object DO2 to be displayed by the projector 30 in an emphasized manner even when the speech content of the second user U2 obtained as a result of the speech recognition includes a predetermined word registered in the storage unit 23.

The storage unit 23 of the electronic device 20 may also store a predetermined word that is to be converted into an image such as a specific illustration or a predetermined video. When the speech content of the first user U1 obtained as a result of the speech recognition includes a predetermined word stored in the storage unit 23, the controller 22 of the electronic device 20 may convert the word in the second display object DO2 to be displayed by the projector 30 into an image such as an illustration or a predetermined video. Converting a predetermined word into an image such as an illustration or a predetermined video allows the second user U2 to easily and intuitively understand the second display object DO2. On the other hand, the controller 22 of the electronic device 20 does not need to convert the speech content of the second user U2 obtained as a result of the speech recognition into an image such as an illustration or a predetermined video even if the speech content of the second user U2 obtained as a result of the speech recognition includes a predetermined word registered in the storage unit 23.

There may be multiple first users U1 and/or second users U2. The speech recognition unit 21 or the controller 22 of the electronic device 20 may be configured to identify the first user U1 and/or the second user U2 who is speaking from among multiple people based on the speaker's voice pitch, voiceprint characteristics, and other voice characteristics of the speaker. The controller 22 may change the display mode of the text in at least one of the first display object DO1 or the second display object DO2 in accordance with the identified speaker. Changing the display mode includes at least one of changing the display color or changing the display position. This allows the first user U1 and/or the second user U2 to easily know who is saying the speech content in the first display object DO1 and/or the second display object DO2.

Furthermore, the electronic device 20 may have a translation function for translating text into a foreign language. In this case, the controller 22 may include a translation engine. The storage unit 23 stores dictionary information etc. required for performing translation. The controller 22 sets text information obtained by translating the speech content of the first user U1 obtained as a result of speech recognition into, for example, a language used by the second user U2 as the second display object DO2. This allows the projector display system 1 to display the speech content of the first user U1 in a language that the second user U2 can understand, even if the second user U2 speaks a language different from that of the first user U1. The controller 22 may also use text information obtained by translating the speech content of the second user U2 obtained as a result of the speech recognition into, for example, a language used by the first user U1, as the first display object DO1. This allows the projector display system 1 to display the speech content of the second user U2 in a language that the first user U1 can understand, even if the first user U1 speaks a language different from that of the second user U2.

### (Use of Speech Recognition Processing Etc. Using External Cloud Server)

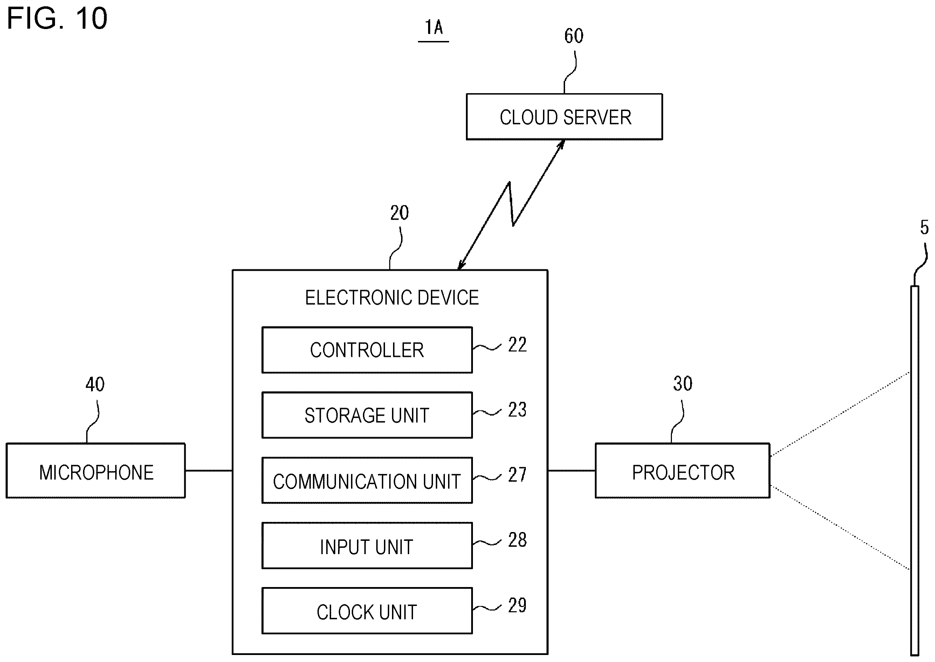

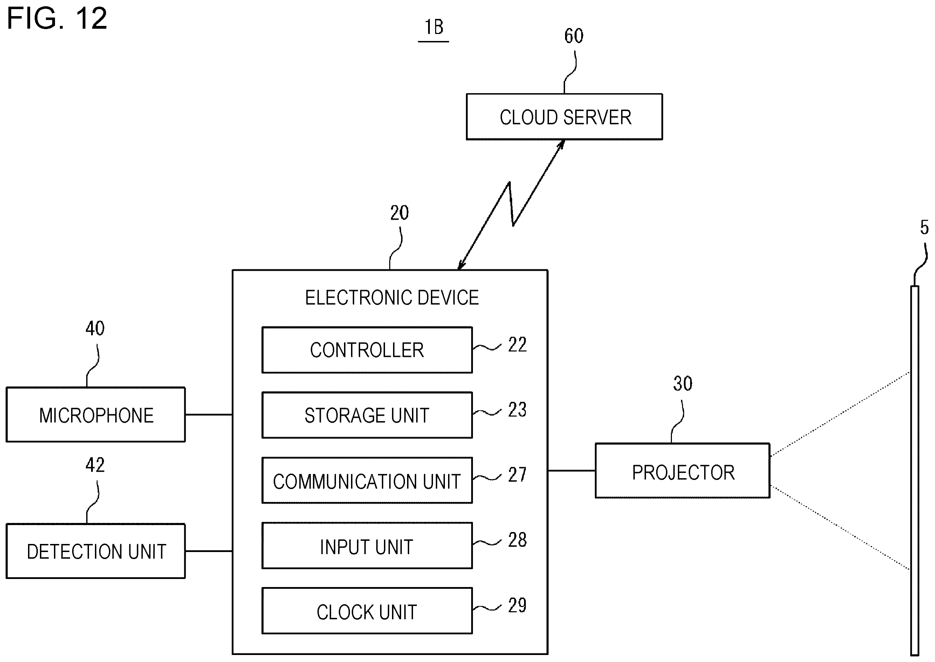

Hereinafter, an embodiment in which an external cloud server 60 (see FIGs. 10 and 12) that provides speech recognition processing is used will be described. A "cloud server" is a server that can be accessed via a network such as the Internet. An example of the cloud server 60 in the following embodiment is a server that executes a speech recognition service provided as a paid service by a third party. Use of the cloud server 60 is assumed to be charged on a pay-per-use basis according to the connection time or the data amount of a transmitted audio signal. The projector display system is configured to transmit an audio signal to the cloud server 60 when a predetermined condition is satisfied.

In an embodiment, the external cloud server 60 may provide a translation function for translating text into another language instead of or in addition to the speech recognition processing. In this case, the cloud server 60 may include a translation engine. As a result of the cloud server 60 providing the translation function, the electronic device 20 can receive the result of the text being translated into a foreign language from the cloud server 60 even if the electronic device 20 does not have a function such as a translation engine.

### (Example Configuration of System That Communicates With Cloud Server)

A projector display system 1A according to an embodiment of the present disclosure will be described with reference to FIG. 10. In FIG. 10, components that are the same as or similar to those included in the projector display system 1 described above are denoted by the same reference symbols as those included in the projector display system 1.

The projector display system 1A includes a transparent screen 5, an electronic device 20, a projector 30, and a microphone 40. The transparent screen 5 is illustrated in a simplified manner in FIG. 10, but includes a screen unit 11 and a light-shielding portion 12, similarly to the transparent screen 5 illustrated in FIG. 2.

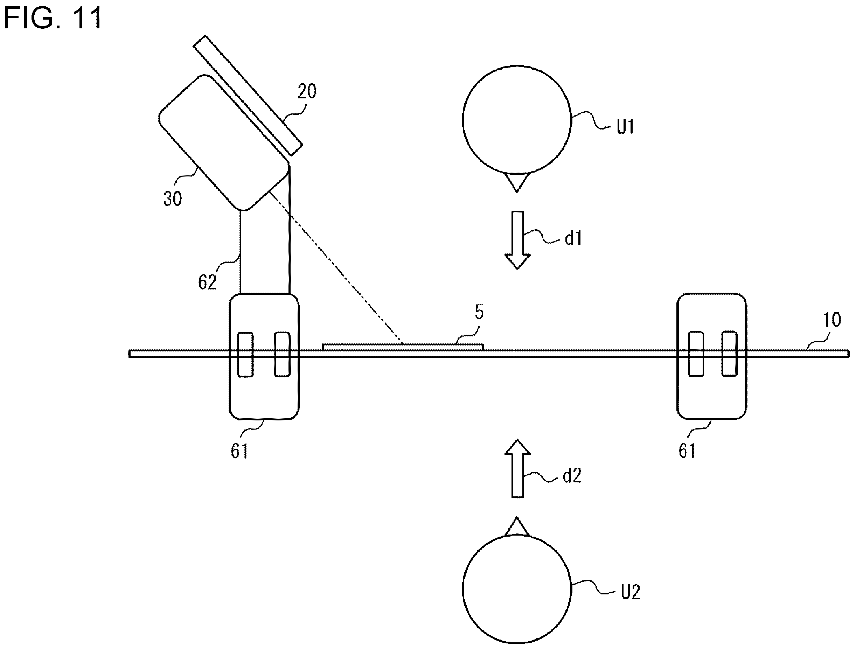

In an embodiment, the transparent screen 5, the electronic device 20, and the projector 30 may be arranged as illustrated in the top view in FIG. 11. As illustrated in FIG. 11, the first user U1 faces the second user U2 in the direction of an arrow d1, that is, across the transparent screen 5. In addition, the second user U2 faces the first user U1 in the direction of an arrow d2, that is, across the transparent screen 5. In short, the first user U1 and the second user U2 face each other across the transparent screen 5.

The transparent screen 5 may be formed in an integrated manner with a transparent base material 10, such as an acrylic plate. The transparent screen 5 may be provided across the entire surface or part of one surface of the base material. The transparent screen 5 is supported by one or more stands 61 and is arranged to stand approximately vertically upright on a desk located between the first user U1 and the second user U2. The projector 30 is fixed to a positioning member 62 extending from one of the stands 61. The positioning member 62 fixes the distance and the orientation of the projector 30 with respect to the transparent screen 5. In the illustrated example, the electronic device 20 is, for example, a smartphone or a portable information terminal. The microphone 40 may be built into the electronic device 20. The microphone 40 may be a separate device from the electronic device 20 and electrically connected to the electronic device 20. In the example illustrated in FIG. 11, the microphone 40 is built into or connected to the electronic device 20 and arranged on the first user U1 side. On the other hand, the microphone 40 may be connected to the electronic device 20 and arranged on the second user U2 side. Furthermore, the microphone 40 may include a microphone disposed on the first user U1 side that is built into or connected to the electronic device 20, and a microphone disposed on the second user U2 side that is connected to the electronic device 20.

The electronic device 20 includes a controller 22 and a storage unit 23, similarly to the electronic device 20 of the projector display system 1 of FIG. 2, but does not need to include a speech recognition unit 21. The electronic device 20 further includes a communication unit 27. The electronic device 20 may further include an input unit 28 and/or a clock unit 29.

Returning to FIG. 10, the description of the projector display system 1A will continue. The controller 22 includes one or more processors similarly to the controller 22 of the projector display system 1. The controller 22 is configured to control the entire electronic device 20 and to transmit an audio signal acquired by the microphone 40 to the cloud server 60 via the communication unit 27. The controller 22 is configured to acquire text information (character information) converted from the audio signal by the cloud server 60 via the communication unit 27. The controller 22 may be configured to acquire text information (character information) translated into a foreign language by the cloud server 60 via the communication unit 27. The controller 22 causes the projector 30 to display the received text information as a display object, as in the case of the projector display system 1.

The storage unit 23 stores information necessary for processing executed by the controller 22, information obtained as a result of processing executed by the controller 22, and so on, as in the case of the projector display system 1. The controller 22 includes a storage device such as a semiconductor memory, as in the case of the projector display system 1.

The communication unit 27 communicates with devices outside the electronic device 20 by wireless or wired communication means. The communication unit 27 may realize communication using various communication schemes, such as a wired LAN (local area network) standard, a wireless LAN standard such as Wifi, and a mobile communication standard such as 4G (4th Generation) and 5G (5th Generation). The communication unit 27 transmits audio signals to the cloud server 60 and receives text data from the cloud server 60.

The input unit 28 accepts inputs and operations from the first user U1. The input unit 28 may include a switch provided in the electronic device 20 or a switch electrically connected to the electronic device 20. A switch that is part of the input unit 28 may be attached to the microphone 40. The input unit 28 may be linked to a switch of the microphone 40. The input unit 28 may be, for example, a touch panel provided in the electronic device 20. In the example illustrated in FIG. 12, the input unit 28 is assumed to be disposed on the first user U1 side due to being built into or connected to the electronic device 20. On the other hand, the input unit 28 may be connected to the electronic device 20 and disposed on the second user U2 side. Furthermore, there may be multiple input units 28 with one disposed on the first user U1 side by being built into or connected to the electronic device 20, and the other disposed on the second user U2 side by being connected to the electronic device 20. The input unit 28 disposed on the second user U2 side may be attached to the microphone 40 disposed on the second user U2 side.

The clock unit 29 is configured to measure time. The clock unit 29 may be realized by, for example, an RTC (real-time clock) built into the electronic device 20. The clock unit 29 may be provided as one function of the controller 22. The clock unit 29 can function as one or more timers capable of measuring elapsed time starting from one or more points in time.

### (Example Including Detection Unit)

A projector display system 1B including a detection unit according to an embodiment of the present disclosure will be described with reference to FIG. 12. The projector display system 1B may communicate with an external cloud server 60 that provides speech recognition processing, similarly to the projector display system 1A illustrated in FIG. 10. The projector display system 1B differs from the projector display system 1A illustrated in FIG. 10 in that the projector display system 1B includes a detection unit 42. The configuration of the projector display system 1B other than the detection unit 42 is the same or similar to that of the projector display system 1A, and therefore only the differences from the projector display system 1A will be described below, and other descriptions will be omitted.

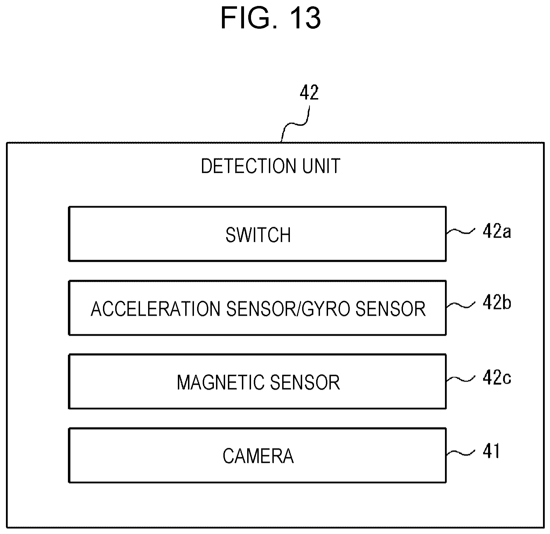

The detection unit 42 may be provided separately from the electronic device 20 and connected to the electronic device 20 in a wired and/or wireless manner. The detection unit 42 may also be provided in (for example, built into) the electronic device 20 or the microphone 40 etc. The detection unit 42 may include at least one selected from a group consisting of a switch 42a, an acceleration sensor and/or gyro sensor 42b, a magnetic sensor 42c, and a camera 41 illustrated in FIG. 13. The detection unit 42 may include a sensor for detecting the presence of at least one of the first user U1 or the second user U2.

The switch 42a may be operated by the first user U1 and/or the second user U2. For example, the switch 42a may detect an operation such as being pressed by the first user U1 and/or the second user U2. Whether an operation has been performed by either the first user U1 or the second user U2 can be detected by providing the switch 42a on each of the first user U1 side and the second user U2 side. The switch 42a may be designed to be switched on/off. The switch 42a may be designed to be maintained in an on state only when pressed and to be maintained in an off state when not pressed. The switch 42a may be a touchpad that detects, for example, touch, tap, slide, swipe, and/or pinch operations performed by the first user U1 and/or the second user U2. The switch 42a may be provided in the electronic device 20 or the microphone 40. In addition, for example, the input unit 28 may realize the function of the switch 42a. When the microphone 40 detects a sound input, the switch 42a is operated by the first user U1 and/or the second user U2, and therefore whether the sound detected by the microphone 40 is from the first user U1 or the second user U2 can be detected.

The acceleration sensor/gyro sensor 42b may include at least one of an acceleration sensor or a gyro sensor. The acceleration sensor/gyro sensor 42b may have a function of detecting the orientation of the electronic device 20 or the microphone 40. For example, the acceleration sensor/gyro sensor 42b may be configured to be able to detect whether the microphone 40 faces the first user U1 or the second user U2. The acceleration sensor/gyro sensor 42b detects the orientation of the microphone 40 when the microphone 40 detects a sound input, and in this way, whether the voice detected by the microphone 40 is from the first user U1 or the second user U2 can be detected.

The magnetic sensor 42c may have a function of detecting the orientation of the electronic device 20 or the microphone 40, similarly to the acceleration sensor/gyro sensor 42b. For example, the magnetic sensor 42c may be configured to be able to detect whether the microphone 40 faces the first user U1 or the second user U2 by comparing the orientation of the magnetic sensor 42c with the direction of the earth's magnetism. When the microphone 40 detects the input of sound, the magnetic sensor 42c detects the direction of the microphone 40, and thus, whether the voice detected by the microphone 40 is from the first user U1 or the second user U2 can be detected.

The camera 41 may be one or two cameras that capture each of the first user U1 and the second user U2. The camera 41 may be a camera with a wide field of view that captures both the first user U1 and the second user U2. The presence of either or both of the first user U1 and the second user U2 can be detected based on the presence of a person in an image of the camera 41. The camera 41 may capture the mouths of the first user U1 and the second user U2. By detecting the movement of the mouths of the first user U1 and the second user U2 captured by the camera 41 when the microphone 40 detects the input of sound, whether the speech detected by the microphone 40 is from the first user U1 or the second user U2 can be detected.

### (Specific Embodiment of Projector Display System 1)

Next, technical problems solved by the projector display system 1 according to an embodiment of the present disclosure will be described. The first user U1 and the second user U2 may use the same language or different languages. Below, an example in which the first user U1 and the second user U2 use the same language will be described.

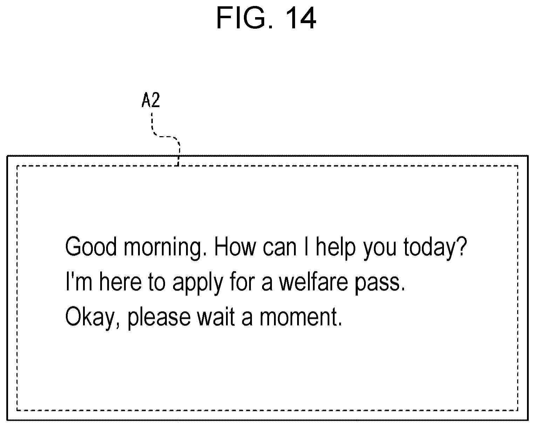

The projector display system 1 acquires Japanese speech data of the first user U1 via, for example, the microphone 40, and displays the speech data as characters in a predetermined area (second display area A2) of the screen unit 11. As a result, for example, as illustrated in FIG. 14, the speech content of the first user U1 is displayed in the second display area A2 as Japanese characters saying "Good morning. How can I help you today?". FIG. 14 illustrates the display on the screen unit 11 as seen from the second user U2 side. The second user U2 can check the result of the speech recognition of the speech content of first user U1 by looking at the display (Japanese characters) in the second display area A2.

Next, the projector display system 1 acquires Japanese speech data of the second user U2 via, for example, the microphone 40, and displays the speech data as characters in a predetermined area (second display area A2) of the screen unit 11. As a result, as illustrated in FIG. 14, for example, the speech content of the second user U2 is displayed in the second display area A2 as Japanese characters saying "I'm here to apply for a welfare pass". The second user U2 can check the result of the speech recognition of his/her speech by looking at the display (Japanese characters) in the second display area A2.

Furthermore, the projector display system 1 acquires Japanese speech data of the first user U1 and displays the speech data as characters in a predetermined area (second display area A2) of the screen unit 11. As a result, for example, as illustrated in FIG. 14, the speech content of the first user U1 is displayed in the second display area A2 as Japanese characters saying "Okay, please wait a moment".

As a result, when the conversational exchanges between the first user U1 and the second user U2 are displayed on one screen as illustrated in the second display area A2 in FIG. 14, the first user U1 and/or the second user U2 may have difficulty distinguishing at a glance which character string corresponds to which piece of speech. That is, in the display, as illustrated in FIG. 14, both the first user U1 and the second user U2 may have difficulty distinguishing their own speech from the speech of the other user, and may have difficulty grasping the history of each other's exchanges in the conversation. Therefore, in an exchange via a screen displayed in this way, there is a risk that communication between the interlocutors will not be smooth.

According to the projector display system 1 of an embodiment, characters based on speech of the first user and characters based on speech of the second user are displayed in different display modes. Therefore, according to the projector display system 1 of an embodiment, even if characters generated for two interlocutors are displayed on the same screen, the first user U1 and the second user U2 can easily distinguish which character string corresponds to which piece of speech. That is, according to the projector display system 1 of an embodiment, both the first user U1 and the second user U2 can easily distinguish their own speech from the other user's speech, and can easily grasp the history of their exchanges in the conversation. Therefore, according to the projector display system 1 of an embodiment, therefore, according to the projector display system 1 of an embodiment, communication between the interlocutors is smooth.

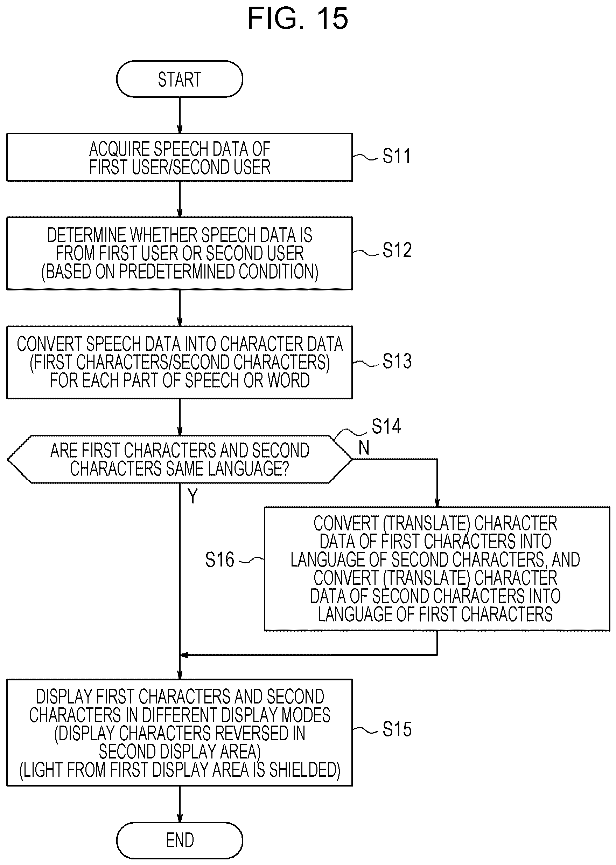

Hereafter, the above-mentioned operation of the projector display system 1 will be described. FIG. 15 is a flowchart explaining the operation of the projector display system 1.

In the following description, the language used by the first user U1 (speaker) will also be referred to as a first language. Furthermore, the language used by the second user U2 (listener) will also be referred to as a second language. As in the above example, the language used by the first user U1 (speaker) is Japanese. In other words, the first language is Japanese. On the other hand, the language used by the second user U2 (listener) is also Japanese. In other words, the second language is Japanese. The first language and the second language may be set, for example, by the first user U1 and/or the second user U2 at the start of or before the start of operation of the projector display system 1, or may be set at any appropriate timing. In an example, the first language may be automatically determined through, for example, speech recognition of the language of the first user. Similarly, the second language may be automatically determined by, for example, speech recognition of the language of the second user.

When the operation illustrated in FIG. 15 starts, the projector display system 1 acquires speech data based on the speech of the first user U1 and/or speech data based on the speech of the second user U2 (Step S11). Hereinafter, for example, the controller 22 of the electronic device 20 may perform control relating to the operation illustrated in FIG. 15.

In Step S11, the controller 22 may acquire speech data based on the speech of the first user U1 and/or the second user U2 detected by, for example, the microphone 40. For example, when the microphone 40 is installed on each of the first user U1 side and the second user U2 side, each microphone 40 may detect the speech of the first user U1 or the second user U2. Furthermore, when the microphone 40 is installed only on the first user U1 side, when the second user U2 speaks, the microphone 40 may be directed toward the second user U2 in order that the microphone 40 may detect the speech of the second user U2. In this case, when the first user U1 next speaks, the microphone 40 may be directed toward the first user U1 so that the microphone 40 may detect the speech of the first user U1.

Next, the projector display system 1 determines whether the acquired speech data based on the speech of the first user U1 and/or the second user U2 is based on the speech of the first user U1 or the second user U2 (Step S12). In Step S12, the projector display system 1 may determine whether the acquired speech data is based on the speech of the first user U1 or the second user U2, based on a predetermined condition. Here, the predetermined condition can be various conditions. Specific examples of the predetermined condition are given below.

In an embodiment, the controller 22 may determine whether the speech data is based on the speech of the first user U1 or the second user U2, based on a condition related to detection performed by the switch 42a. For example, when the switch 42a is installed on both the first user U1 side and the second user U2 side, the controller 22 may instruct each of the first user U1 and the second user U2 to turn on the switch 42a when speaking. For example, when the microphone 40 detects speech and the switch 42a installed on the first user U1 side is turned on, the controller 22 may determine that the speech data acquired is based on the speech of the first user U1. On the other hand, when the microphone 40 detects speech and the switch 42a installed on the second user U2 side is turned on, the controller 22 may determine that the speech data acquired is based on the speech of the second user U2.

Furthermore, for example, when the switch 42a is installed only on the first user U1 side or the second user U2 side, the controller 22 may instruct one of the first user U1 and the second user U2 to switch the switch 42a on/off depending on which user is speaking. For example, the controller 22 may issue an instruction that the switch 42a is to be switched on when the first user U1 speaks, and to be otherwise switched off. In this case, for example, if the switch 42a is on when the microphone 40 detects speech, the controller 22 may determine that the acquired speech data is based on the speech of the first user U1. On the other hand, for example, if the switch 42a is off when the microphone 40 detects speech, the controller 22 may determine that the acquired speech data is based on the speech of a user other than the first user U1 (for example, the second user U2). In addition, for example, the controller 22 may issue an instruction that the switch 42a is to be switched on when the second user U2 speaks, and to be otherwise switched off. In this case, for example, if the switch 42a is on when the microphone 40 detects speech, the controller 22 may determine that the acquired speech data is based on the speech of the second user U2. On the other hand, for example, if the switch 42a is off when the microphone 40 detects speech, the controller 22 may determine that the acquired speech data is based on the speech of a user other than the second user U2 (for example, the first user U1).

In an embodiment, the controller 22 may determine whether the speech data is based on the speech of the first user U1 or the second user U2 based on a condition related to detection performed by at least one of the acceleration sensor/gyro sensor 42b or the magnetic sensor 42c. At least one of the acceleration sensor/gyro sensor 42b or the magnetic sensor 42c can determine the orientation of the electronic device 20 and/or the microphone 40. Therefore, for example, when the microphone 40 is installed only on the first user U1 side, when the first user U1 speaks, the first user U1 may be instructed to face the microphone 40 toward the first user U1 side. On the other hand, in this case, when the second user U2 speaks, the first user U1 may be instructed to face the microphone 40 toward the second user U2 side. For example, when the microphone 40 detects speech and is facing toward the first user U1 side, the controller 22 may determine that the acquired speech data is based on the speech of the first user U1. On the other hand, when the microphone 40 detects speech and is facing toward the second user U2 side, the controller 22 may determine that the acquired speech data is based on the speech of the second user U2.

In an embodiment, the controller 22 may determine whether the speech data is based on the speech of the first user U1 or the second user U2 based on a condition related to detection performed by the camera 41. Based on an image or video of the faces etc. of the first user U1 and the second user U2 captured by the camera 41, the controller 22 can determine whether the first user U1 and/or the second user U2 is speaking. For example, based on an image or video of the mouths etc. of the first user U1 and the second user U2 captured by the camera 41, the controller 22 can determine whether the first user U1 and/or the second user U2 is speaking. In this case, if the microphone 40 is installed on both the first user U1 side and the second user U2 side, for example, the first user U1 and/or the second user U2 do not need to operate an operation unit such as the switch 42a themselves. For example, when the microphone 40 detects speech and the camera 41 detects that the mouth etc. of the first user U1 is moving, the controller 22 may determine that the acquired speech data is based on the speech of the first user U1. On the other hand, for example, when the microphone 40 detects speech and the camera 41 detects that the mouth etc. of the second user U2 is moving, the controller 22 may determine that the acquired speech data is based on the speech of the second user U2.

In an embodiment, the controller 22 may determine whether the speech data is based on the speech of the first user U1 or the second user U2 based on a condition related to detection performed by multiple microphones, such as a microphone array (array microphone). The microphone 40 including multiple microphones can determine the direction of the sound source generating the sound detected by the multiple microphones. Therefore, if such a microphone 40 detects a voice generated on the first user U1 side, for example, the controller 22 may determine that the acquired speech data is based on the speech of the first user U1. On the other hand, if the microphone 40 detects a voice generated on the second user U2 side, for example, the controller 22 may determine that the acquired speech data is based on the speech of the second user U2.

After Step S12, the controller 22 of the projector display system 1 converts the speech data based on the speech of the first user U1 and/or the speech data based on the speech of the second user U2 into character data for each part of speech or word in the language (Step S13). As described above, the controller 22 may cause the cloud server 60 to perform the operation of Step S13. In this case, the controller 22 transmits the speech data based on the speech of the first user U1 and/or the speech data based on the speech of the second user U2 to the cloud server 60 via the communication unit 27. Then, the cloud server 60 transmits the result of converting the speech data based on the speech of the first user U1 and/or the speech data based on the speech of the second user U2 into character data for each part of speech or word in the language to the electronic device 20. In this case, the electronic device 20 may receive the character data from the cloud server 60 via the communication unit 27. Similarly, at least a part of the operation performed by the controller 22 may be performed by the cloud server 60. In addition, in an embodiment, the operation of Step S12 may be performed by the cloud server 60 instead of or in addition to the operation performed by the controller 22. In this case, the controller 22 transmits the speech data based on the speech of the first user U1 and/or the speech data based on the speech of the second user U2 acquired in Step S11 to the cloud server 60 via the communication unit 27.

The characters based on the speech of the first user U1 converted into character data in Step S13 may be referred to as "first characters" hereinafter. Similarly, the characters based on the speech of the second user U2 converted into character data in Step S13 may be referred to as "second characters" hereinafter. In short, in Step S12, the electronic device 20 may execute a determination step of determining whether at least one of the first characters or the second characters is based on the speech of the first user or the second user based on a predetermined condition. Based on such processing, the electronic device 20 may execute an acquisition step of acquiring at least one of the first characters or the second characters, for example, at a time point up to Step S13.

As described above, the controller 22 may determine whether at least one of the first characters or the second characters is based on the speech of the first user or the second user, based on a predetermined condition. Here, the predetermined condition may be, for example, a condition related to detection performed by at least one selected from a group consisting of the switch 42a, the acceleration sensor/gyro sensor 42b, the magnetic sensor 42c, the camera 41, and the multiple microphones.

Next, the controller 22 determines whether the first characters and the second characters are in the same language (Step S14). As mentioned above, here, the case where the first characters and the second characters are in the same language (Japanese) (Yes in Step S14) will be described. If the first characters and the second characters are in the same language, the controller 22 displays the first characters and the second characters on the display (screen unit 11) so that the first characters and the second characters are displayed in different display modes from each other (Step S15). In Step S15, the controller 22 may change the display mode of at least one of the first characters or the second characters and display the characters on the display (screen unit 11). Thus, the electronic device 20 includes a display (e.g., screen unit 11) that displays the first characters, which are characters based on the speech of the first user, and the second characters, which are characters based on the speech of the second user.

In Step S15, the controller 22 may display one of the first characters and the second characters on the display (screen unit 11) so as to be emphasized over the other of the first characters and the second characters. Furthermore, in Step S15, the controller 22 may display one of the first characters and the second characters on the display (screen unit 11) with at least one selected from a group consisting of a size, thickness, color, font, background color, decorative character, and display position different from the other of the first characters and the second characters.

For example, the controller 22 may display the second characters, which are characters based on the speech of the second user U2, on the display (screen unit 11) so as to be emphasized over the first characters, which are characters based on the speech of the first user U1. In this case, the controller 22 may, for example, make the size of the second characters greater than the size of the first characters. Furthermore, the controller 22 may, for example, make the font of the second characters more distinctive than the font of the first characters. Furthermore, the controller 22 may set the color of the first characters to black or white, which is used for displaying normal characters, and set the color of the second characters to a more conspicuous color, such as red or yellow. Furthermore, the controller 22 may, for example, display the second characters in italics, boldface, or the like, and display the first characters F without using italics, boldface, or the like. The controller 22 may, for example, display the second characters with an underline and display the first characters without an underline. In addition, the controller 22 may change the display mode of at least one of the first characters or the second characters in various ways so that the first characters and the second characters are displayed in different display modes. Furthermore, the controller 22 may display the first characters and the second characters in different display modes by appropriately combining two or more of the above-mentioned display modes.

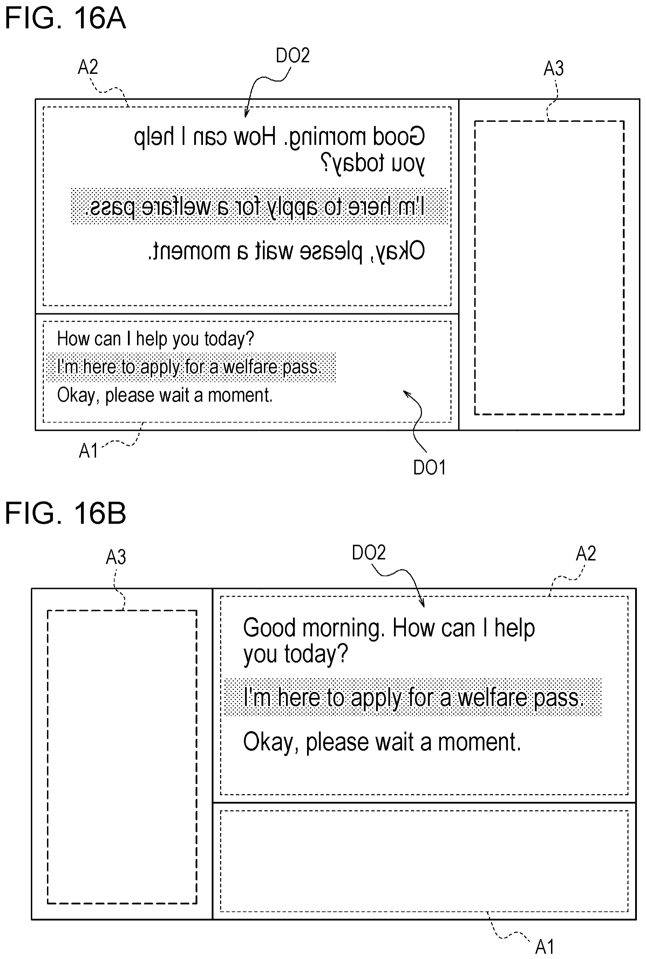

FIGs. 16A and 16B are diagrams illustrating an example of display on the display (screen unit 11) after the processing of Step S15 has been performed. In FIGs. 16A and 16B, the content of the characters based on the speech of the first user U1 and the second user U2 is the same as that in FIG. 14. That is, FIGs. 16A and 16B illustrate an example of the result of displaying characters such as those in FIG. 14 in the projector display system 1. In the second display area A2 in FIG. 14, the first characters based on the speech of the first user U1 and the second characters based on the speech of the second user U2 are displayed in a state where the first characters and the second characters are difficult to distinguish from each other. On the other hand, in the first display area A1 and the second display area A2 illustrated in FIG. 16A, the first characters based on the speech of the first user U1 are displayed in a normal mode, whereas the second characters based on the speech of the second user U2 are displayed so as to be highlighted with a marker. In addition, in the second display area A2 illustrated in FIG. 16B, the first characters based on the speech of the first user U1 are displayed in a normal mode, whereas the second characters based on the speech of the second user U2 are displayed so as to be highlighted with a marker. Therefore, in FIG. 16A and FIG. 16B, the fact that the characters "I'm here to apply for a welfare pass." highlighted with the marker are the second characters, that is, the characters based on the speech of the second user U2 can be easily understood. On the other hand, in FIG. 16A and FIG. 16B, the characters "Good morning. How can I help you today?" and "Okay, please wait a moment" that are not highlighted with a marker can be easily understood as being the first characters, that is, characters based on the speech of the first user U1.

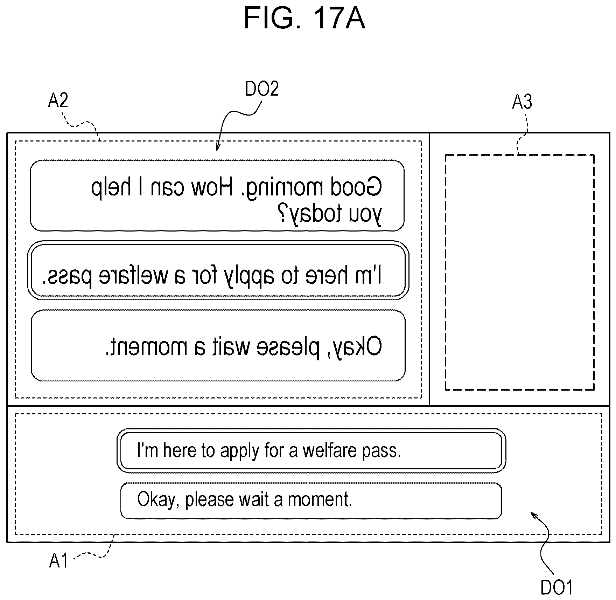

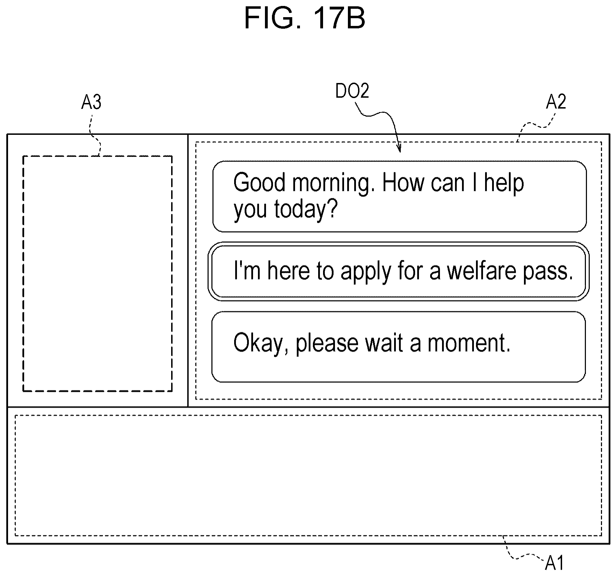

FIGs. 17A and 17B are diagrams illustrating another display example on the display (screen unit 11) after the processing of Step S15 has been performed. In the first display area A1 and the second display area A2 illustrated in FIG. 17A, the first characters based on the speech of the first user U1 and the second characters based on the speech of the second user U2 are displayed while surrounded by different balloons. In the second display area A2 illustrated in FIG. 16B, the first characters based on the speech of the first user U1 and the second characters based on the speech of the second user U2 are displayed while surrounded by different balloons. Therefore, in FIG. 16A and FIG. 16B, the fact that the characters "I'm here to apply for a welfare pass." highlighted with the marker are the second characters, that is, the characters based on the speech of the second user U2 can be easily understood. On the other hand, in FIG. 16A and FIG. 16B, the characters "Good morning. How can I help you today?" and "Okay, please wait a moment" that are not highlighted with a marker can be easily understood as being the first characters, that is, characters based on the speech of the first user U1.

FIG. 16A and FIG. 17A illustrate the transparent screen 5 (or the screen unit 11) as seen by the first user U1. As illustrated in FIG. 16A and FIG. 17A, the first display object DO1 is displayed in the first display area A1. In addition, the second display object DO2 is displayed in the second display area A2. The second display object DO2 is displayed to the first user U1 as mirrored characters. The first display object DO1 is displayed as normal characters.

FIG. 16B and FIG. 17B illustrate the image projected by the same projector 30 on the transparent screen 5 (or the screen unit 11) as seen from the second user U2 side. As illustrated in FIG. 16B and FIG. 17B, when viewed from the second user U2 side, the second display object DO2 is displayed as normal characters. In the first display area A1, the first display object DO1 is displayed as mirrored characters if the light-shielding portion 12 is not present. The first display object DO1 consists of unnecessary characters that do not need to be displayed to the second user U2, and since the characters are mirrored characters, the characters may be confusing to the second user U2. However, as a result of the light-shielding portion 12 being arranged on the first display area A1 of the screen unit 11 (or the screen unit 11), the first display object DO1 is not displayed to the second user U2 as illustrated in FIG. 16B and FIG. 17B.

In this way, in an embodiment, the controller 22 may display either the first characters or the second characters on the display (screen unit 11) included in the display system in a horizontally reversed manner. Furthermore, the display (screen unit 11 or transparent screen 5) included in the display system controlled by the electronic device 20 may include the first display area A1 provided with the light-shielding portion 12 that at least partially blocks the transmission of light, and the second display area A2 that at least partially transmits light. In this case, the controller 22 may display either the first characters or the second characters in a horizontally reversed manner. Furthermore, the controller 22 may display at least one of the first characters or the second characters in the first display area A1 so as to be shielded by the light-shielding portion 12. Furthermore, the controller 22 may display at least one of the first characters or the second characters in the second display area A2. The display system according to an embodiment may include, for example, a display (screen unit 11 or transparent screen 5). Furthermore, the display system according to an embodiment may include, for example, the projector 30. Furthermore, the display system according to an embodiment may include, for example, the microphone 40. Furthermore, the display system according to an embodiment may include, for example, the electronic device 20. Furthermore, the display system according to an embodiment may include, for example, elements other than the above-mentioned functional units, or may not include some of the above-mentioned functional units.

As described above, according to the projector display system 1 of an embodiment, even if characters said by two interlocutors are displayed on the same screen, the first user U1 and the second user U2 can easily distinguish which character string corresponds to which piece of speech. That is, according to the projector display system 1 of an embodiment, both the first user U1 and the second user U2 can easily distinguish their own speech from the other user's speech, and can easily grasp the history of their exchanges in the conversation. Therefore, according to the projector display system 1 of an embodiment, communication between the interlocutors is smooth.

### (Example of Translating Characters)

Next, a case will be described in which the first language used by the first user U1 (speaker) is different from the second language used by the second user U2 (listener). Here, the language used by the first user U1 (speaker) is Japanese. In other words, the first language is Japanese. On the other hand, the language used by the second user U2 (listener) is English. That is, the second language is English.

In Step S14 in FIG. 15, if the first characters and the second characters are not in the same language (i.e., are in different languages), the controller 22 performs the processing of Step S16 illustrated in FIG. 15, and then performs the processing of Step S15 described above. In Step S16, the controller 22 converts the character data of the first characters (Japanese) into the language of the second characters (English), i.e., translates the character data. In addition, in Step S16, the controller 22 may convert the character data of the second characters (English) into the language of the first characters (Japanese), i.e., translate the character data. As described above, instead of the controller 22, the cloud server 60 may convert each of the first characters and/or the second characters into character data of a different language.

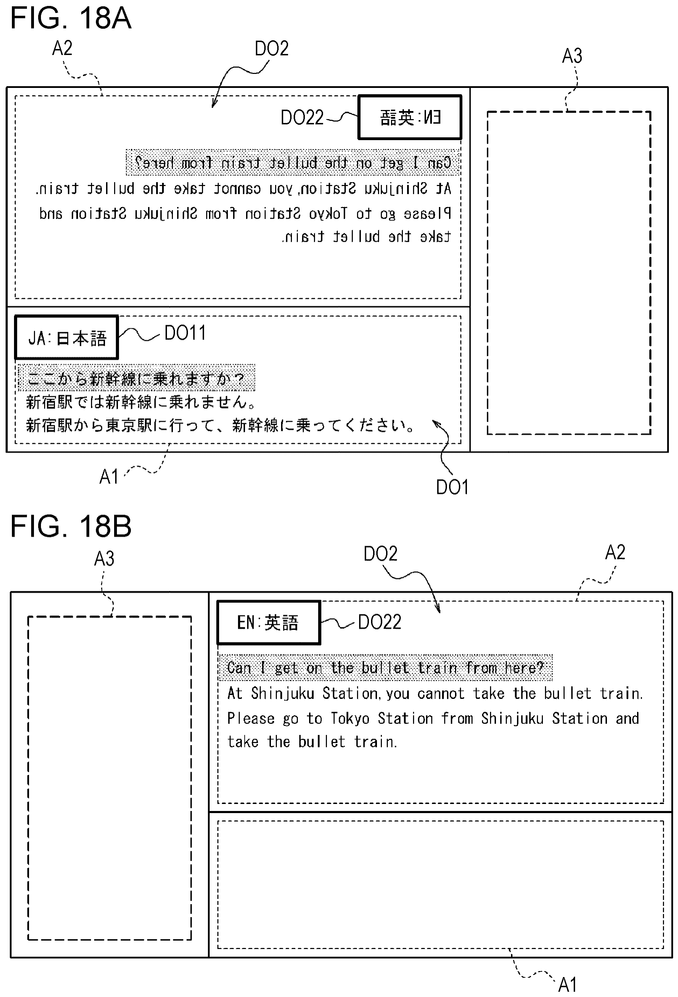

FIGs. 18A and 18B are diagrams illustrating an example of display on the display (screen unit 11) after the processing of Step S16 and then Step S15 have been performed. In the second display area A2 illustrated in FIG. 18B, the electronic device 20 displays characters (first characters and second characters) based on the speech of the first user U1 and the second user U2 translated into English as the display object DO2 displayed to the second user U2. In this way, the electronic device 20 may translate the first characters (Japanese) based on the speech of the first user U1 into English and display the translated first characters in the second display area A2. In addition, the electronic device 20 may display the second characters (English) based on the speech of the second user U2 in English, without being translated, in the second display area A2. On the other hand, in the first display area A1 illustrated in FIG. 18A, the electronic device 20 displays characters (first characters and second characters) based on the speech of the first user U1 and the second user U2 in Japanese, without being translated, as the display object DO1 displayed to the first user U1. In this way, the electronic device 20 may translate the second characters (English) based on the speech of the second user U2 into Japanese and display the translated characters in the first display area A1. Furthermore, the electronic device 20 may display the first characters (Japanese) based on the speech of the first user U1 in Japanese, without being translated, in the first display area A1. In the first display area A1 and the second display area A2 illustrated in FIG. 18A, the first characters based on the speech of the first user U1 are displayed in a normal manner, whereas the second characters based on the speech of the second user U2 are displayed so as to be highlighted a marker. In addition, in the second display area A2 illustrated in FIG. 16B, the first characters based on the speech of the first user U1 are displayed in a normal mode, whereas the second characters based on the speech of the second user U2 are displayed so as to be highlighted with a marker. For this reason, in FIG. 18A and FIG. 18B, the fact that the characters with the marker are the second characters, i.e., the characters based on the speech of the second user U2 can be easily understood. On the other hand, in FIG. 18A and FIG. 18B, the fact that the characters without the marker are the first characters, i.e., the characters based on the speech of the first user U1 can be easily understood.

In this way, when the language of the first characters and the language of the second characters are different from each other, the electronic device 20 may execute a translation step of translating the first characters into the language of the second characters. In addition, the electronic device 20 may display the result of the first characters being translated into the language of the second characters as the first characters on the display (screen unit 11). Furthermore, when the language of the first characters and the language of the second characters are different languages from each other, the electronic device 20 may obtain the result of the first characters being translated into the language of the second characters as the first characters, for example, from the cloud server 60. In this case, the electronic device 20 may display the result of the first characters being translated into the language of the second characters as the first characters on the display (screen unit 11). [0101] In addition, as illustrated in Figs. 18A and 18B, when the language of the first characters and the language of the second characters are distinguished from each other, a display suggesting the languages may be shown. For example, as illustrated in the second display area A2 in FIG. 18A and FIG. 18B, if the language of the second characters is English, a display object DO22 indicating this fact may be displayed. For example, the fact that the language of the second characters is English may be displayed in Japanese (" 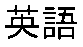 ") and English ("EN"). In addition, as illustrated in the first display area A1 in FIG. 18A, if the language of the first characters is Japanese, a display object DO11 indicating this fact may be displayed. For example, the fact that the language of the first characters is Japanese may be displayed in Japanese (" 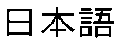 ") and English ("JA" or "JP", etc.). The language of the first characters and the language of the second characters may be set, for example, by the first user U1 and/or the second user U2 at the start of or before the start of operation of the projector display system 1, or may be set at any appropriate timing. In addition, in an example, the language of the first characters may be determined automatically, for example, by speech recognition of the language of the first user. Similarly, the language of the second characters may be automatically determined, for example, by speech recognition of the language of the second user. The display mode of the display object DO11 and the display object DO22 are not limited to those illustrated in FIG. 18A and FIG. 18B, and may be various display modes. In addition, the positions (locations) where the display object DO11 and the display object DO22 are displayed on the display (screen unit 11) are not limited to those in the examples illustrated in FIG. 18A and FIG. 18B, and may be various positions (locations).

### (Example of Displaying Graphic Related to Keyword)

In the case where a predetermined keyword is displayed when characters based on the speech of the first user U1 and the second user U2 are displayed on the display (screen unit 11), the electronic device 20 may also display a predetermined graphic related to the predetermined keyword. In order to perform such processing, for example, the storage unit 23 of the electronic device 20 may store a predetermined keyword and a predetermined graphic in association with each other. In addition, when performing such processing, for example, the controller 22 of the electronic device 20 may acquire information in which a predetermined keyword and a predetermined graphic are stored in association with each other from, for example, the cloud server 60 via the communication unit 27.

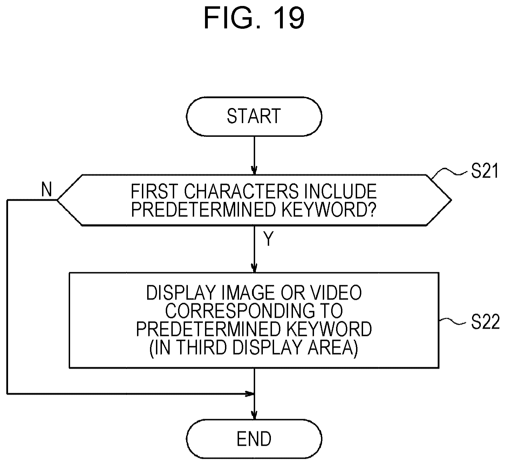

FIG. 19 is a flowchart explaining the operation of the projector display system 1 displaying a predetermined graphic related to a predetermined keyword. The operation illustrated in FIG. 19 may be executed after, for example, Step S15 of the operation illustrated in FIG. 15.

When the operation illustrated in FIG. 19 starts, the controller 22 determines whether or not the first characters to be displayed on the display (screen unit 11) include a predetermined keyword (Step S21). If the first characters do not include a predetermined keyword in Step S21, the controller 22 may skip the processing indicated in Step S22 and end the operation illustrated in FIG. 19. On the other hand, if the first characters include a predetermined keyword in Step S21, the controller 22 may execute the processing indicated in Step S22 and then end the operation illustrated in FIG. 19. In Step S22, the controller 22 displays an image or video corresponding to the predetermined keyword on the display (screen unit 11). Here, the image or video corresponding to the predetermined keyword may be an image or video associated with the predetermined keyword. The image or video associated with the predetermined keyword may be read from the storage unit 23, or may be obtained from the cloud server 60 via the communication unit 27, for example.

In the example illustrated in FIG. 16A and FIG. 16B, for example, a case is assumed in which an image or video illustrating the appearance of the "welfare pass" is associated with the predetermined keyword "welfare pass" in the storage unit 23 or the cloud server 60. In this case, when displaying the characters "welfare pass" in the second display area A2, for example, the electronic device 20 may display an image or video illustrating the appearance of the "welfare pass" in, for example, a third display area A3 on the display (screen unit 11). Here, the electronic device 20 may display an image or video illustrating the appearance of the "welfare pass" on the display (screen unit 11) at the same time or almost the same time as displaying the characters "welfare pass". Furthermore, the electronic device 20 may display an image or video illustrating the appearance of the "welfare pass" on the display (screen unit 11) a little before or after displaying the characters "welfare pass". [0106] In addition, in the example illustrated in Figs. 18A and 18B, for example, a case is assumed in which an image or video illustrating the appearance of " 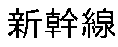 " is associated with a predetermined keyword "bullet train" in the storage unit 23 or the cloud server 60. In this case, the electronic device 20 may display an image or video illustrating the appearance of " 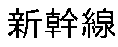 " on the display (screen unit 11) in the third display area A3 when displaying the characters "bullet train" in the second display area A2, for example.

In addition, when a predetermined graphic related to a predetermined keyword is displayed as described above, the graphic may be used to help the second user U2 to easily understand the characters based on the speech of the first user U1. That is, the electronic device 20 may display an image or video associated with the predetermined keyword, for example, in the third display area A3, only when the first characters based on the speech of the first user U1 include the predetermined keyword. On the other hand, the electronic device 20 may not display an image or video associated with the predetermined keyword, for example, in the third display area A3, even if the second characters based on the speech of the second user U2 include the predetermined keyword. In this way, the predetermined image or video is displayed only in association with the speech of the service provider (first user U1), so that occurrence a situation in which the predetermined image or video is frequently displayed in the interaction between the interlocutors and causes confusion in smooth communication is suppressed.

In this way, if the first characters include a predetermined keyword, the electronic device 20 may display a predetermined image or video corresponding to the predetermined keyword on the display (screen unit 11). On the other hand, if the second characters include the predetermined keyword, the electronic device 20 may not display the predetermined image or video on the display (screen unit 11).

In order to perform the above-mentioned processing, the electronic device 20 may separately acquire information on the first characters and information on the second characters, for example, from the cloud server 60. The information acquired in this manner may be stored in, for example, the storage unit 23 of the electronic device 20 or a working area in any storage unit. In order to perform the above-mentioned processing, the electronic device 20 may execute a storage step in which information on the first characters and information on the second characters are stored separately from each other. The information stored in this manner may be stored in, for example, the storage unit 23 of the electronic device 20 or a storage area in any storage unit.

In the above-described embodiment, the size and/or position etc. of the first display area A1, the second display area A2, and/or the third display area A3 are not limited to those illustrated in the drawings, and may be changed to any size and/or position etc. in order to improve usability. Furthermore, the third display area A3 displaying an image or video corresponding to a predetermined keyword may be, for example, an area at least partially included in at least one of the first display area A1 or the second display area A2.

At least part of the above-described control and processing may be executed by the projector display system 1 instead of or together with the electronic device 20, or may be executed by the cloud server 60.

According to a program of an embodiment, the display mode of at least one of the first characters or the second characters is changed and displayed on the display (screen unit 11) so that the first characters and the second characters are displayed in different display modes. Therefore, according to the program of an embodiment, even if characters produced by two interlocutors are displayed on the same screen, for example, the first user U1 and the second user U2 can easily distinguish which character string corresponds to which piece of speech. That is, according to the program of an embodiment, both the first user U1 and the second user U2 can easily distinguish their own speech from the other user's speech, and can easily grasp the history of their exchanges in the conversation. Therefore, according to the program of an embodiment, communication between the interlocutors becomes smooth. In addition, according to the projector display system 1 of an embodiment, the display mode of at least one of the first characters or the second characters is changed so that the first characters and the second characters are displayed in different display modes on the display (screen unit 11). Therefore, according to the projector display system 1 of an embodiment, communication between the interlocutors is smooth.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions etc. included in each component can be rearranged in a logically consistent manner, and a plurality of components can be combined into a single component or a single component can be divided into a plurality of components. Although embodiments of the present disclosure have been described while focusing on devices, the embodiments of the present disclosure can also be realized as a method including steps executed by individual component of the device. Embodiments according to the present disclosure can also be realized as a method executed by a processor included in a device, a program, or a storage medium or storage medium on which a program is recorded. Please understand that the scope of the present disclosure also encompasses these forms.

In the present disclosure, "first", "second," and so on are identifiers used to distinguish between such configurations. Regarding the configurations, "first", "second", and so on used to distinguish between the configurations in the present disclosure may be exchanged with each other. For example, the identifiers "first" and "second" can be exchanged between the first display object and the second display object. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in the present disclosure is not to be used to interpret the order of the configurations or to justify the existence of identifiers with smaller numbers.

The components and functional blocks included in each embodiment of the present disclosure can be arranged in the same hardware or different hardware as appropriate. Some or all of the microphone, camera, and detection unit in each embodiment of the present disclosure may be included in the same hardware as an electronic device or a projector. Some or all of the controller, storage unit, communication unit, input unit, and clock unit of each embodiment of the present disclosure may be included in a projector as hardware or software. The projector display system using the cloud server of the present disclosure can also be used in a system that does not include the second display area and converts the speech of the first user into text information (character information) and displays the text information to the second user using only the first display area.

### REFERENCE SIGNS

1, 1A, 1B projector display system
5 transparent screen
10 base material
11 screen unit
12 light-shielding portion
20 electronic device
21 speech recognition unit
22 controller
23 storage unit
24 display
27 communication unit
28 input unit
29 clock unit
30 projector
40 microphone
42 detection unit
42a switch
42b acceleration sensor/gyro sensor
42c magnetic sensor
41 camera
60 cloud server
61 stand
62 positioning member
U1 first user
U2 second user
A1 first display area
A2 second display area
DO1 first display object
DO2 second display object
θ half angle of view

## Claims

1. A program for causing an electronic device that controls a display system that displays a first character based on speech of a first user and a second character based on speech of a second user on a display to perform:
acquiring at least one of the first character or the second character;
determining, based on a predetermined condition, whether at least one of the first character or the second character is based on the speech of the first user or the second user; and
displaying the first character and the second character on the display while changing a display mode of at least one of the first character or the second character so that the display modes of the first character and the second character are different from each other.

2. The program according to claim 1,
wherein in the determining,
whether at least one of the first character or the second character is based on the speech of the first user or the second user is determined based on a condition related to detection using at least one selected from a group consisting of a switch, an acceleration sensor, a gyro sensor, a magnetic sensor, a camera, and a plurality of microphones as the predetermined condition.

3. The program according to claim 1,
wherein in the displaying,
one of the first character and the second character is displayed on the display so as to be emphasized over another of the first character and the second character.

4. The program according to claim 1,
wherein in the displaying,
one of the first character and the second character is displayed on the display with at least one selected from a size, thickness, color, font, background color, decorative character, and display position different from that of another of the first character and the second character.

5. The program according to claim 1,
wherein when a language of the first character and a language of the second character are different from each other,
the program causes the electronic device to perform translating the first character into the language of the second character, and
a result of translating the first character into the language of the second character is displayed as the first character in the displaying.

6. The program according to claim 1,
wherein when a language of the first character and a language of the second character are different from each other,
a result of translating the first character into the language of the second character is acquired as the first character in the acquiring, and
a result of translating the first character into the language of the second character is displayed as the first character in the displaying.

7. The program according to any one of claims 1 to 6,
wherein in the displaying,
either the first character or the second character is displayed in a horizontally reversed manner on the display.

8. The program according to any one of claims 1 to 6,
wherein the display of the display system includes a first display area provided with a light-shielding portion that at least partially blocks transmission of light, and a second display area that at least partially transmits light, and
in the displaying, either the first character or the second character is displayed in a horizontally reversed manner in the first display area so that at least one of the first character or the second character is shielded by the light-shielding portion, and
at least one of the first character or the second character is displayed in the second display area.

9. The program according to claim 1,
wherein if the first character includes a predetermined keyword, a predetermined image or video corresponding to the predetermined keyword is displayed on the display in the displaying, and
if the second character includes the predetermined keyword, the predetermined image or video is not displayed on the display.

10. The program according to claim 1,
wherein in the acquiring, the first character and the second character are acquired separately, or
the program causes the electronic device to perform storing in which the first character and the second character are stored separately from each other.

11. An electronic device comprising: a controller that performs control to display a first character that is based on speech of a first user, and a second character that is based on speech of a second user, on a display,
wherein the controller acquires at least one of the first character or the second character,
determines whether at least one of the first character or the second character is based on the speech of the first user or the second user based on a predetermined condition, and
changes a display mode of at least one of the first character or the second character and displays the first character and the second character on the display so that the first character and the second character have different display modes from each other.

12. A method for controlling an electronic device that displays a first character that is based on speech of a first user and a second character that is based on speech of a second user on a display, the control method comprising:
acquiring at least one of the first character or the second character;
determining, based on a predetermined condition, whether at least one of the first character or the second character is based on the speech of the first user or the second user; and
displaying the first character and the second character on the display while changing a display mode of at least one of the first character or the second character so that the first character and the second character have different display modes from each other.
